# EUROPEAN PATENT SPECIFICATION

(11) **EP 1 622 793 B1**
(45) Date of publication and mention of the grant of the patent: **18.10.2006**
(21) Application number: 04732914.9
(22) Date of filing: 14.05.2004
(51) Int. Cl.: B60R 13/08, B62D 25/20, G10K 11/16

(54) **COMPONENT FOR THE REDUCTION OF NOISE, ESPECIALLY VEHICLE FLOOR PANEL**
BAUTEIL ZUR GERÄUSCHMINDENDERUNG, INSBESONDERE BODENPLATTE EINES FAHRZEUGES
COMPOSANT POUR REDUIRE LE BRUIT, EN PARTICULIER PLANCHER POUR VEHICULES

(30) Priority: 14.05.2003 CH 846032003
(43) Date of publication of application: 08.02.2006
(73) Proprietor: Rieter Technologies A.G., 8406 Winterthur (CH)
(72) Inventor: WILDHABER, Alexander, CH-8880 Walenstadt (CH); LEHMANN, Dirk, CH-5408 Ennetbaden (CH); GODANO, Philippe, CH-Winterthur (CH); MANTOVANI, Maurizio, CH-8542 Wiesendangen (CH)
(74) Representative: Alder, Hans Rudi
(86) International application number: PCT/CH2004/000298
(87) International publication number: WO 2004/101320

(56) References cited:
- EP-A- 1 266 815
- DE-A- 4 237 513
- DE-A- 4 430 428
- DE-U- 29 605 599
- DE-U- 29 814 593
- US-A- 2 441 476
- US-A- 5 489 122
- PATENT ABSTRACTS OF JAPAN vol. 0121, no. 09 (M-682), 8 April 1988 (1988-04-08) -& JP 62 238141 A (MAZDA MOTOR CORP), 19 October 1987 (1987-10-19)

## Description

The present invention relates to a double-walled component according to the preamble of Claim 1 (see DE 4430 428A), as well as use thereof according to Claim 8.

Components for reducing noise levels in the interior of vehicles are known, for example, from DE-44'12'427. In this vehicle sound insulator a perforated plate is attached to the exterior of the passenger compartment, whereby an air space is created. By means of this arrangement it is possible to reduce undesirable noise levels emitted in particular from the engine compartment by taking advantage of the Helmholtz resonance. The air space created between the perforated plate and the flooring sheet can possibly be filled with a porous material in order to improve the wide band sound absorption somewhat. Unfortunately such components easily become soiled when used in this manner, i.e. the open pored materials become saturated with water and/or oil and clog the pores of the perforated plate. These components rapidly lose their acoustic effectiveness and, in time, become heavier. Furthermore this arrangement satisfies only poorly or not at all locally different acoustic requirements.

It is therefore also known in motor vehicle technology to use chamber absorbers such as described, for example, in DE-U-296'17'845. These chamber absorbers have a plurality of resonance chambers which comprise a thin foil capable of oscillation and which foil can even be perforated. It is evident that such an arrangement is highly susceptible to damage and is not suitable for use as a vehicle flooring component.

It is therefore the aim of the present invention to provide a light weight flooring component which can be used as a vehicle floor and has a stable acoustic effectiveness. In particular a component is to be provided whose frequency-dependent insulation and absorption behaviour can be varyingly adjusted locally.

This aim is achieved according to the invention by a double walled component having the features of Claim 1. In particular, a chamber absorber is encapsulated between the two supporting plates of this component.

Advantageous further developments of the inventive double walled component have the features of the dependent claims. Thus, in a preferred embodiment an air space is provided between the inner plate and the outer plate of the double walled component.

In a further preferred embodiment a sound absorbing intermediate layer is provided between the inner plate and the outer plate, whereby this intermediate layer may be made at least partially of a fibrous material, a foam material or a multilayer foil, in order to form an air space with the next adjacent layer, with the next adjacent plate or with the chamber absorber.

In a preferred embodiment of the inventive component, the chamber absorber is fixedly connected to the outer plate or to the inner plate, and is in particular adhered, soldered or tacked thereto. The inventive chamber absorber preferably comprises irregularly arranged and/or differently formed chambers. These chambers can, in turn, be provided with individual knobs or spacing elements.

In a further embodiment of the invention the chamber absorber is directly integrated into the outer or inner plate whereby this plate comprises crossed-over ribs or ridges similar to a coffered ceiling, on which ribs or ridges a foil is arranged in such a manner that a plurality of closed chambers are formed. These closed chambers can be dimensioned and arranged differently or commeasurably. A suitable foil may be a single or multilayer 2-dimensional prestressed or non-prestressed foil of any kind and material, porous or nonporous. This foil may be of a thermoplastic material and may be preheated or not and may be embossed or not. Also this foil can show a membrane pattern achieved by a manufacturing process, which induces locally stretched areas after preheating. The raw foil material thickness range is selected between 0.005 - 2.0 mm. The connection of such foils to the above mentioned plates may be made by thermal, vibrational or ultrasonic welding, or by glueing or tapering.

The invention shall be described in more detail by means of exemplary embodiments and with the aid of the drawings.
- Fig. 1: is a schematic view of an inventive component;
- Fig. 2: is a schematic view of a preferred development of the inventive component.

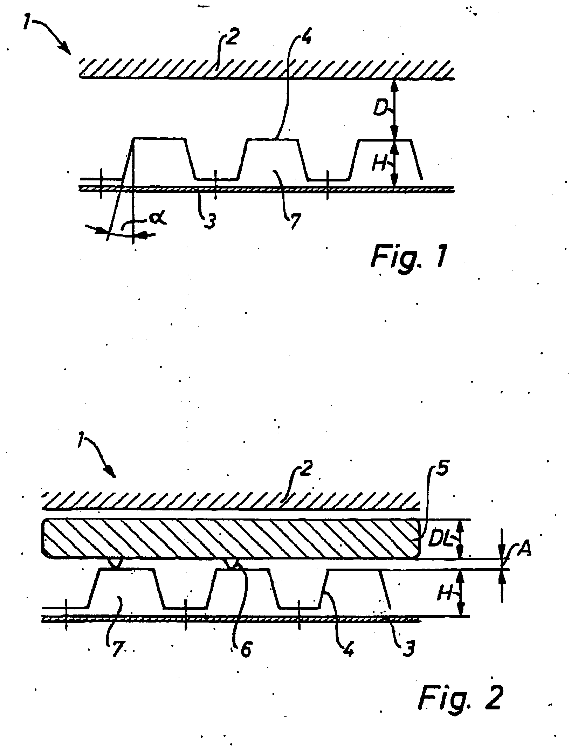

The double walled component 1 shown in Figure 1 comprises an inner plate 2 and an outer plate 3 spaced therefrom. This inner plate 2 can serve as a flooring plate of a vehicle passenger compartment and can be covered with a vehicle carpet or another vehicle interior covering. The outer plate 3 can serve as an outer shield or a flooring shield for a vehicle. According to the invention, a chamber absorber 4 is provided in the closed space between the inner plate 2 and the outer plate 3. This chamber absorber 4 is preferably made from a flat and suitably formed material and can be adhered, soldered or tacked to the outer plate 3. The height H of the individual chambers 7 of the chamber absorber 4 as well as the inclination α of the side walls of these chambers 7 can be individually selected by the expert. The distance D between the chamber absorber 4 and the inner plate 2 will also be adjusted by the expert. In a further embodiment, the chamber absorber 4 can also be attached to the inner plate 2. This chamber absorber 4 is preferably made of a sheet of foamed material, a foil or a pressed fibrous material. This material can be air impermeable or can have a predetermined airflow resistance. In order to achieve locally differing absorption or insulation values, the forms, the heights, the volumes and the arrangement of the individual chambers 7 of the chamber absorber can be varyingly selected.

Figure 2 shows a further development of the inventive component 1 which also has an outer plate 3 and an inner plate 2. In this embodiment, an intermediate layer 5 lies between the chamber absorber 4 and the inner plate 2. This intermediate layer 5 is made at least in part of a fibrous material, a foamed material or a multilayer foil and preferably has knobs 6 which serve to space the intermediate layer 5 from the chamber absorber 4, or, if desired, from the inner plate 2, i.e. to create an air space A between the chamber absorber 4 and the intermediate layer 5, or between the intermediate layer 5 and the inner plate 2. It is to be understood that the size of this air space A can be dimensioned by the expert so as to fulfil local requirements.

The component according to the invention can fulfil a number of acoustic functions simultaneously. In particular, acoustic absorption, acoustic insulation and damping behaviour can be adjusted locally and in a simple manner. The intermediate layer 5 serves first and foremost to space the chamber absorber 4 and the inner plate 2 from each other, but it can at the same time be open pored to serve as an acoustic absorber. Furthermore, this intermediate layer 5 can also serve as an acoustically effective spring of a spring-mass-system, or can serve acoustic insulation purposes, or can have a sealing function. First test results have shown that the use of an encased chamber absorber 4 leads to noise reduction of more than 2 dB.

The advantages of the inventive component are clearly evident to the expert and are to be seen in particular in its light weight, its acoustic stability and in the locally differing adjustibility of the insulation and absorption behaviour. Further developments of this double walled component 1 lie within the scope of the expert. In particular, the individual chambers 7 of the chamber absorber 4 can be provided with knobs 6 in order to create the desired air space A. It is to be understood that the arrangement of the chamber absorber 4, of the air space A and of the intermediate layer 5 can be adjusted by the expert according to the requirements. In particular, the intermediate layer 5 can be made of a plurality of metallic foils and can be open pored or perforated.

## Claims

1. A double walled component for the reduction of noise in the interior of vehicles, comprising an inner plate (2) and an outer plate (3) spaced therefrom, whereby a chamber absorber (4) having a plurality of chambers (7) is encapsulated between the inner plate (2) and the outer plate (3), whereby this chamber absorber (4) is at least partially made of a foamed material, a foil or a pressed fibrous material and whereby the chamber absorber (4) is fixedly attached and in particular is adhered, soldered or tacked to the outer plate (3) or wherein the chamber absorber (4) is integrated in the outer plate (3) **characterised in that** the chamber absorber (4) is spaced from the inner plate (2) by a distance D.

2. A component according to Claim 1, wherein an intermediate layer (5) is provided between the inner plate (2) and the outer plate (3).

3. A component according to Claim 1 or 2, wherein, in the case of the chamber absorber (4) being integrated in the outer plate (3) or the inner plate (2), then said outer plate (3) or inner plate (2) comprise a plurality of ribs or ridges in the manner of a coffered ceiling, to which ribs or ridges a foil is fixed in such a manner that a plurality of closed chambers (7) are formed.

4. A component according to Claim 1, wherein the chamber absorber (4) comprises irregularly arranged and/or differently formed chambers (7).

5. A component according to Claim 1, wherein the chamber absorber (4) is provided with knobs (6).

6. A component according to Claim 2, wherein the intermediate layer (5) is formed at least partially of a fibrous material, a foamed material or a multilayer foil.

7. A component according to Claim 2, wherein the intermediate layer (5) is provided with knobs (6).

8. Use of the component according to Claim 1 as an acoustically effective vehicle flooring.

## Patentansprüche

1. Doppelwandiges Bauteil für die Geräuschpegel-Reduktion im Innenraum von Fahrzeugen, umfassend eine Innenplatte (2) und eine davon beabstandete Aussenplatte (3), wobei ein Kammerabsorber (4) mit einer Vielzahl Kammern (7) zwischen der Innenplatte (2) und der Aussenplatte (3) eingekapselt ist, wobei dieser Kammerabsorber (4) mindestens teilweise aus einem Schaummaterial, einer Folie oder einem gepressten Fasermaterial gefertigt ist, und wobei der Kammerabsorber (4) mit der Aussenplatte (3) fest verbunden ist und insbesondere an diese geklebt, geschweisst oder geheftet ist, oder wobei der Kammerabsorber (4) in die Aussenplatte (3) integriert ist, **dadurch gekennzeichnet, dass** der Kammerabsorber (4) um eine Distanz D von der Innenplatte (2) beabstandet ist.

2. Bauteil nach Anspruch 1, **dadurch gekennzeichnet, dass** zwischen der lnnenplatte (2) und der Aussenplatte (3) eine Zwischenschicht (5) vorgesehen ist.

3. Bauteil nach Anspruch 1 oder 2, **dadurch gekennzeichnet, dass**, wenn der Kammerabsorber (4) in die Aussenplatte (3) oder die Innenplatte (2) integriert ist, die Aussenplatte (3) oder die Innenplatte (2) mit einer Vielzahl Rippen im Stil einer Kasettendecke versehen sind, an welche Rippen eine Folie derart befestigt ist, dass eine Vielzahl geschlossener Kammern (7) gebildet wird.

4. Bauteil nach Anspruch 1, **dadurch gekennzeichnet, dass** der Kammerabsorber (4) unregelmässig angeordnete und/oder unterschiedlich geformte Kammern (7) aufweist.

5. Bauteil nach Anspruch 1, **dadurch gekennzeichnet, dass** der Kammerabsorber (4) mit Noppen (6) versehen ist.

6. Bauteil nach Anspruch 2, **dadurch gekennzeichnet, dass** die Zwischenschicht (5) mindestens teilweise aus einem Fasermaterial, einem Schaummaterial oder einem mehrlagigen Folienmaterial gebildet ist.

7. Bauteil nach Anspruch 2, **dadurch gekennzeichnet, dass** die Zwischenschicht (5) mit Noppen (6) versehen ist.

8. Verwendung des Bauteils gemäss Anspruch 1 als akustisch wirksamer Fahrzeugboden.

## Revendications

1. Composant à double paroi pour réduire le bruit à l'intérieur de véhicules, comprenant une plaque intérieure (2) et une plaque extérieure (3) espacée de celle-ci, dans lequel un amortisseur à chambres (4) comportant une pluralité de chambres (7) est enfermé entre la plaque intérieure (2) et la plaque extérieure (3), dans lequel cet amortisseur à chambres (4) est au moins partiellement fabriqué dans un matériau expansé, une feuille métallique ou un matériau fibreux embouti et dans lequel l'amortisseur à chambres (4) est attaché de manière fixe et en particulier est collé, soudé ou cloué à la plaque extérieure (3) ou dans lequel l'amortisseur à chambres (4) est intégré dans la plaque extérieure (3),
**caractérisé en ce que** l'amortisseur à chambres (4) est espacé de la plaque intérieure (2) d'une distance D.

2. Composant selon la revendication 1, dans lequel une couche intermédiaire (5) est fournie entre la plaque intérieure (2) et la plaque extérieure (3).

3. Composant selon la revendication 1 ou 2, dans lequel, dans le cas où l'amortisseur à chambres (4) est intégré dans la plaque extérieure (3) ou la plaque intérieure (2), alors ladite plaque extérieure (3) ou plaque intérieure (2) comprend une pluralité de nervures ou de stries à la manière d'un plafond à caissons, auxquelles nervures ou stries est fixée une feuille métallique de telle manière qu'une pluralité de chambres fermées (7) soit formée.

4. Composant selon la revendication 1, dans lequel l'amortisseur à chambres (4) comprend des chambres agencées de manière irrégulière et/ou formées de manière différente (7).

5. Composant selon la revendication 1, dans lequel l'amortisseur à chambres (4) est muni de protubérances (6).

6. Composant selon la revendication 2, dans lequel la couche intermédiaire (5) est formée au moins de manière partielle d'un matériau fibreux, d'un matériau expansé ou d'une feuille métallique multicouche.

7. Composant selon la revendication 2, dans lequel la couche intermédiaire (5) est munie de protubérances (6).

8. Utilisation du composant selon la revendication 1 en tant que plancher pour véhicule à effet acoustique.
